# EUROPÄISCHE PATENTANMELDUNG

(11) **EP 4 070 897 A1**
(43) Veröffentlichungstag der Anmeldung: **12.10.2022**
(21) Anmeldenummer: 22156957.7
(22) Anmeldetag: 16.02.2022
(51) Int. Cl.: B22F 5/10, B22F 10/28, B33Y 80/00, F16L 33/02, F16L 33/035

(54) **FEDERBANDSCHELLE UND VERFAHREN ZU DEREN HERSTELLUNG**

(30) Priorität: 09.03.2021 DE 102021105652
(71) Anmelder: Ruhr-Universität Bochum, 44801 Bochum (DE); Universität Siegen, 57076 Siegen (DE)
(72) Erfinder: Sehrt, Jan T., 45470 Mülheim (DE); Grimm, Tobias, 45355 Essen (DE); Brandt, Robert, 57439 Attendorn (DE); Dick, Holger, 57439 Attendorn (DE); Elvenkemper, Andreas, 51645 Gummersbach (DE); Lovato, Stephane, 57462 Olpe (DE)
(74) Vertreter: Cohausz Hannig Borkowski Wißgott

(57) **Zusammenfassung**

Die Erfindung betrifft eine Federbandschelle und ein Verfahren zur Herstellung einer Federbandschelle umfassend ein ringförmiges Bandelement (1) mit zwei freien Endbereiche (2, 3), die zumindest bereichsweise nebeneinanderliegend angeordnet sind, wobei das Bandelement (1) additiv hergestellt wird, vorzugsweise elementweise oder schichtweise additiv hergestellt wird, insbesondere wobei die das Bandelement (1) bildenden Schichten in Ebenen parallel zur Ringebene angeordnet werden, vorzugsweise das Bandelement (1) aus wenigstens einem Pulver, vorzugsweise Metallpulver, additiv hergestellt wird, insbesondere durch pulverbettbasiertes Schmelzen, vorzugsweise mittels Laserstrahl oder mittels Elektronenstrahl.

## Beschreibung

Die Erfindung betrifft ein Verfahren zur Herstellung einer Federbandschelle umfassend ein ringförmiges Bandelement mit zwei freien Endbereichen, die zumindest bereichsweise nebeneinanderliegend angeordnet sind. Die Erfindung betrifft auch eine Federbandschelle, insbesondere die nach dem nachfolgend beschriebenen Verfahren hergestellt bzw. gefertigt ist, insbesondere welche die konstruktiven Merkmale aufweisen, die mit dem Verfahren erzielt werden.

Federbandschellen sind im Stand der Technik allgemein bekannt. Sie werden eingesetzt, um Schläuche auf Rohrstutzen zu befestigen, wofür die Federbandschellen aufgespreizt und über den auf dem Stutzen positionierten Schlauch aufgeschoben werden. Nach Entfernung einer die Aufspreizung bewirkenden Maßnahme übt die Federbandschelle eine Kraft auf den Schlauch aus, wodurch dieser gedichtet auf dem Stutzen befestigt ist.

Federbandschellen weisen ein Bandelement auf, welches zwei freie Enden hat. Das Bandelement ist zu einem Ring geformt, der den Querschnitt umgreift, in welchem der Schlauch positioniert wird. Die beiden freien Endbereiche des Bandelements sind dabei üblicherweise bereichsweise nebeneinanderliegend angeordnet, insbesondere in der axialen Richtung des gebildeten Ringes nebeneinander.

Eine übliche Konstruktion, die bevorzugt auch bei dem erfindungsgemäßen Verfahren hergestellt wird, sieht vor, dass einer der beiden freien Endbereiche zwei axial beabstandete Außenschenkel ausbildet, zwischen denen der Innenschenkel liegt, der am anderen freien Endbereich des Bandelements gebildet ist. In der Abfolge von Außenschenkel - Innenschenkel - Außenschenkel liegen die Schenkel und damit die freien Endbereiche des Bandelementes in der axialen Richtung nebeneinander. Es ist ebenso möglich, die freien Endbereiche jeweils etwas über die Hälfte der axialen Breite mit einer Ausklinkung zu versehen und diese ausgeklinkten Bereiche nebeneinander anzuordnen.

Die axiale Richtung wird hierbei durch die Richtung einer Achse bestimmt, um die herum der gebildete Ring und somit das Bandelement in der Umfangsrichtung verläuft. Vorzugsweise ist die Achse senkrecht zur Ebene, oder zu der Ebenenschar, in welcher der gebildete Ring angeordnet ist.

An den freien Endbereichen des Bandelementes sind Handhaben angeordnet, die in der Fachterminologie auch als Ohren bezeichnet werden. Solche Handhaben können durch nach radial außen gerichtete Bereiche des Bandelementes bzw. der jeweiligen freien Endbereiche gebildet sein. Diese Handhaben dienen dazu, den inneren freien Querschnitt der Federbandschelle zu ändern, insbesondere zu vergrößern bzw. aufzuspreizen, und stehen nach radial außen von dem zum Ring geformten Bereich des Bandelementes vor. Die Handhaben können manuell oder mit einem Handhabungswerkzeug, z.B. einer Zange ergriffen zu werden. Zum Zweck der Öffnung des Ringquerschnittes werden üblicherweise die Handhaben aufeinander zu bewegt. Als eine Handhabe wird jegliches Element an einer Federbandschelle verstanden, das zur Handhabung der Federbandschelle bedient werden kann, insbesondere um den freien Ringquerschnitt zu ändern.

Einige bekannte Ausführungen von Federbandschellen sehen Clips vor, mit denen die Handhaben in einer Position gehalten werden, in welcher der Ring querschnittsvergrößert ist gegenüber seiner späteren Arbeitsstellung.

Sämtliche vorgenannten Ausführungen bekannter Federbandschellen können vorzugsweise auch bei einer erfindungsgemäß hergestellten/gefertigten Federbandschelle vorliegen.

Gängige Herstellungsverfahren sehen vor, solche Federbandschellen aus einem Spaltband oder Flachdraht aus Federstahl-Material auszuschneiden, z. B. durch Stanzen oder durch Laserschneiden, und anschließend das so gewonnene Halbzeug zur Federbandschelle mit Ringform umzuformen. Alle Elemente an der Federbandschelle müssen dabei aus dem ursprünglichen Band formbar sein.

Hierdurch sind Federbandschellen in der Formgebung und der Funktionalität grundsätzlich großen Beschränkungen unterworfen, insbesondere auch durch die beschränkte Materialauswahl, da nur solche Materialien gewählt werden können, die sich als grundsätzlich umformbar erweisen.

Es ist somit eine Aufgabe der Erfindung, diese bestehenden Form- und Funktionsbeschränkungen zu überwinden.

Erfindungsgemäß wird die Aufgabe dadurch gelöst, dass das Bandelement der Federbandschelle additiv hergestellt / gefertigt wird. Hierbei wird das Bandelement vorzugsweise direkt in der Endform hergestellt, welche die Federbandschelle im geschlossenen Zustand, bzw. der Arbeitsstellung aufweist. Eine additive Herstellung/Fertigung kann z.B. elementweise oder schichtweise erfolgen, vorzugsweise gemäß VDI Richtlinie 3405. Elementweise bedeutet insbesondere, dass bei der Fertigung einzelne Elemente bzw. Voxel (als kleinste zu fertigende Einheit) neben- und übereinander positioniert und miteinander verbunden werden. Die erfindungsgemäß gefertigte Federbandschelle ist vorzugsweis eingesetzt für Schlauch-Stutzen-Verbindungen.

Umformschritte wie im Stand der Technik, welche das Material bis über die Elastizitätsgrenze belasten, um diese Endform herzustellen, können somit bei der Erfindung entfallen. Durch die additive Herstellung können weiterhin auch Strukturen oder Eigenschaften am Bandelement hergestellt werden, die in der üblichen Herstellungsart nicht erzeugbar sind.

Weiterhin erschließt die Erfindung die Möglichkeit, neuartige Werkstoffe für Federbandschellen zu verwenden, die bislang aufgrund ihrer fehlenden Umformfähigkeit keine Verwendung finden. Hiermit sind insbesondere Werkstoffe gemeint, die sich durch die herkömmliche Prozessroute des Stanzbiegeverfahrens (trennende und umformende Fertigungsverfahren nach DIN 8580) nicht verarbeiten lassen.

Vorzugsweise ist vorgesehen, dass die das Bandelement bildenden Schichten in Ebenen parallel zur Ringebene angeordnet werden. Die Schichten liegen damit vorzugsweise senkrecht zur eingangs genannten Ringachse. Grundsätzlich kann eine Federbandschelle aber auch in anderen Orientierungen der Schichten hergestellt werden.

Als Material steht grundsätzlich jedes zur Verfügung, das zur additiven Fertigung eingesetzt werden kann, insbesondere Kunststoff oder Metall oder Keramik. Vorzugsweise sieht die Erfindung die Herstellung aus Pulver vor, insbesondere aus Metallpulver oder Kunststoffpulver oder Keramikpulver. Dafür kann z. B. ein pulverbettbasiertes Schmelzverfahren eingesetzt werden, z. B. mittels wenigstens einem Laserstrahl oder Elektronenstrahl, vorzugsweise das in DIN EN ISO/ASTM 52900 definierte pulverbettbasierte Schmelzen [engl. Powder Bed Fusion (PBF)] mittels Laserstrahlen [engl. Laser Beam (LB)] von Metallen [engl. Metals (M)] - PBF-LB/M oder Kunststoffen [engl. Polymers (P)] - PBF-LB/P, aber auch mittels Elektronenstrahl [engl. Electron Beam (EB)] aufgeschmolzene Pulver - PBF-EB/M Grundsätzlich kann eine Federbandschelle aber auch mit anderen, vorzugsweise in DIN EN ISO/ASTM 52900 definierten Prozesskategorien, additiv hergestellt werden.

Bei solchen pulverbettbasierten additiven Verfahren wird das Pulver, vorzugsweise Metallpulver über eine Bodenplatte oder eine vorherige Schicht aufgetragen, z.B. gerakelt, um ein Pulverbett einer vorbestimmten Schichtdicke aus dem Pulver zu erstellen, in welches sodann mittels einer Laserstrahlung oder Elektronenstrahlung eine vorbestimmte Kontur geschrieben wird, welche die Federbandschelle in einer bestimmten, nämlich der aktuell zu fertigenden Ebene beschreibt. Entlang der geschriebenen Kontur wird das Pulver verbunden, vorzugsweise durch Verschmelzen der Pulverpartikel.

Vorzugsweise können beim Verschmelzen der Pulverpartikel die Herstellungsparameter, insbesondere die Laserstrahl- bzw. Elektronenstrahlparameter, wie z.B. die Leistung und/oder Einwirkdauer so gewählt werden, dass das hergestellte Bandelement zumindest bereichsweise, vorzugsweise an jedem Ort eine relative Dichte von größer als 99 %, bevorzugt größer als 99,9% aufweist. Insbesondere kann es vorgesehen sein, eine solche Dichte zumindest in hoch belasteten Bereichen der Federbandschelle herzustellen. Solche hoch belasteten Stellen können z.B. vor der Herstellung durch Simulation ermittelt werden, z.B. durch die Finite-Elemente-Methode. Die relative Dichte soll dabei die Dichte im Vergleich zu einem Vollmaterialkörper (Bulk) des gewählten Materials darstellen.

Erfindungsgemäß kann es vorgesehen sein, im hergestellten Bandelement lokal unterschiedliche Materialeigenschaften, z. B. lokale Eigenschaftsgradienten, herzustellen.

Dies kann z. B. erfolgen durch lokal unterschiedliche Herstellungsparameter, vorzugsweise Parameter der Laser- oder Elektronenstrahlung und/oder Parameter des verwendeten Materials, insbesondere Metallpulvers und/oder lokal geänderte Aufschmelzstrategien. Z. B. können Herstellungsparameter innerhalb ein und derselben zu fertigenden Schicht geändert werden, vorzugsweise durch lokale Änderung der Laser-/ Elektronenstrahlparameter und/oder der Belichtungsstrategie entlang der zu schreibenden Kontur, z. B. durch Variation der Laser-/ Elektronenstrahlleistung und/oder der lokalen Einwirkungsdauer des Laser-/ Elektronenstrahls auf das Pulver und/oder der Fokusgröße auf der Pulverebene und/oder Spur- / Hatchabstand, Scangeschwindigkeit, Schichtstärke.

Unter der lokalen Änderung der Aufschmelzstrategie wird vorzugsweise verstanden, dass wenigstens einer der folgenden Parameter lokal geändert wird: die Länge, die Orientierung, die Anzahl, die Scanreihenfolge, die Belichtungszeit (Pulsen) und/oder der geometrische Verlauf der einzelnen Scanvektoren/ - polygone des Energiestrahls (Laserstrahls oder Elektronenstrahls) mit dem das Werkstoffgefüge erzeugt und eingestellt wird.

Die Erfindung kann auch vorsehen, dass wenigstens eine Eigenschaft des Werkstoffs der Federbandschelle, vorzugsweise z.B. die Härte, insbesondere nach Vickers oder Rockwell oder Brinell, durch die additive Fertigung gegenüber einem artgleichen umgeformten Werkstoff verbessert werden, z.B. vorzugsweise durch eine Reduktion der Korngröße im Gefüge oder eine Reduktion des Restaustenitgehalts oder die Einstellung von Ungleichgewichtszuständen, insbesondere welche zu einer stärker ausgeprägten Ausscheidungshärtung führen. Auch dies kann z.B. durch eine Beeinflussung der Härte mittels Änderung wenigstens eines der zuvor genannten Parameter erfolgen.

Global für eine gesamte Schicht kann ein Herstellungsparameter ebenso durch die vorgenannten Laser-/ Elektronenstrahlparameter geändert werden, aber vorzugsweise auch durch Änderung des eingesetzten Materials, z. B. des Metallpulvers oder durch Änderung der Schichtstärke.

Die Erfindung kann allgemein vorsehen, in unterschiedlichen Schichten oder innerhalb derselben Schicht unterschiedliches Metallpulver einzusetzen. Das kann z. B. bedeuten, dass Pulver verschiedener Metalle bzw. verschiedener Metalllegierungen oder sonstige Kompositmaterialien verwendet werden, und/oder dass Pulver verschiedener Granularität, also Partikelgröße verwendet werden, ggfs. also auch von demselben Metall / derselben Metalllegierung oder demselben Kunststoff oder der Kunststoffmischung.

Z. B. kann in einer bevorzugten Ausführung vorgesehen sein, dass zur Bildung wenigstens einer ganzen Schicht, insbesondere zur Bildung einer Gruppe von aneinander angrenzenden ganzen Schichten, oder zur Bildung eines Bereichs innerhalb einer Schicht oder eines Bereichs in einer Gruppe von Schichten ein Material eingesetzt wird, dessen E-Modul unterschiedlich ist zu dem Material in wenigstens einer anderen Schicht, insbesondere einer anderen Gruppe von aneinander angrenzenden Schichten oder unterschiedlich ist zum Material in einem anderen Bereich.

Dadurch kann bevorzugt erzielt werden, dass bezüglich der Ringachse, um die herum sich das zum Ring geformte Bandelement erstreckt, in einem bzgl. der axialen Richtung, und/oder der radialen Richtung und/oder der Umfangsrichtung betrachteten Kernbereich des Bandelementes das Material ein E-Modul aufweist, welcher unterschiedlich ist, insbesondere geringer oder größer ist, als bei dem Material in Bereichen des Bandelementes, welche den Kernbereich in axialer Richtung, und/oder radialer Richtung und/oder in Umfangsrichtung, umgeben. Durch lokal unterschiedliche Elastizitätsmodule im Bandelement kann die Kraftentwicklung gezielt beeinflusst und definiert eingestellt werden, insbesondere die bezüglich der in Umfangsrichtung, und/oder axialer Richtung betrachtete Flächenpressung kann vergleichmäßigt werden.

Vorzugsweise kann es die Erfindung vorsehen, eine Kraftausübung / Flächenpressung zu erzielen, die in der Umfangsrichtung, insbesondere über volle 360 Grad betrachtet eine Variation aufweist, von <= 20%, vorzugsweise <= 10%, weiter bevorzugt <= 5%, noch weiter bevorzugt <=2% variiert.

Die Erfindung kann beispielsweise vorsehen, Pulver aus wenigstens einem der folgenden Materialien einzusetzen: Titan und seine Legierungen, nichtrostende Stahllegierungen, wenigstens einer Formgedächtnislegierung, insbesondere auf der Basis von Nickel und Titan, vorzugsweise Nitinol, Nickelbasislegierungen, Kupferlegierungen, Aluminiumlegierungen, Kobalt-Chrom-Legierungen, Werkzeugstahllegierungen, sonstige Stahllegierungen, Wolfram und seine Legierungen oder Keramiken. Kombinationen vorgenannter Materialien sind ebenso möglich. Allgemein erschließt die Erfindung auch die Möglichkeit, Federbandschellen aus einem Material additiv zu fertigen, welches klassisch nicht umformbar ist.

Die Erfindung kann weiterhin vorsehen, das erfindungsgemäß hergestellte Bandelement einer nachfolgenden Behandlung zu unterziehen. Das kann z. B. eine Wärmebehandlung sein, insbesondere zum Zweck des Härtens und/oder eine Oberflächenbearbeitung, z. B. Trowalisieren oder der Auftrag einer Beschichtung.

Bevorzugt vorgenommene weitere Ausgestaltungen der Erfindung werden nachfolgend mit allgemeiner Gültigkeit und in Bezugnahme auf die Zeichnungen konkreter beschrieben.

Besonders bevorzugt kann es vorgesehen sein, dass im Bandelement wenigstens eine Ausnehmung hergestellt wird, in die ein Funktionselement eingesetzt wird.

Eine solche Ausnehmung kann so hergestellt werden, dass diese nach Abschluss der Bandherstellung offen ist und in die nach der Bandherstellung das Funktionselement eingesetzt wird. Die Ausnehmung kann z. B. nach der Bandherstellung in Richtung nach radial innen offen sein und/oder nach der Bandherstellung in Richtung nach radial außen offen sein.

Vorzugsweise kann eine Ausnehmung sich in Umfangsrichtung des Bandelementes erstrecken, insbesondere hierdurch einen sich in Umfangsrichtung erstreckenden Kanal bilden, vorzugsweise dessen radialer Abstand zur Bandelementinnenfläche sich in Umfangsrichtung ändert, bevorzugt verringert. Ein solcher Kanal kann z. B. in die nach radial außen weisende Bandfläche münden. In einem solchen Fall kann z. B. ein Funktionselement, z. B. ein Temperatursensor, mit einem Kabel nach Montage einer Federbandschelle in den Kanal eingeschoben werden, insbesondere wonach der Sensor anschließend nahe am Rohrstutzen zu liegen kommt.

Es kann auch eine Ausnehmung hergestellt werden, die nach der Herstellung des Bandes geschlossen ist und in die während einer Verfahrensunterbrechung, in welcher die Ausnehmung zugänglich ist, das Funktionselement eingesetzt wird. Ggfs. muss zuvor in der Ausnehmung befindliches Pulver entfernt werden, z. B. durch Absaugen oder Ausblasen. Vorzugsweise weisen die Ausnehmung und das Funktionselement bei der Verfahrensunterbrechung eine solche jeweilige Größe auf, dass bei einer Verfahrensfortführung das eingesetzte Funktionselement nicht über die Pulverbettebene übersteht.

Eine solche Ausnehmung kann vorzugsweise nach der Bandelementherstellung geschlossen sein und weiter bevorzugt näher zur Bandelementinnenfläche als zur Bandelementaußenfläche angeordnet sein.

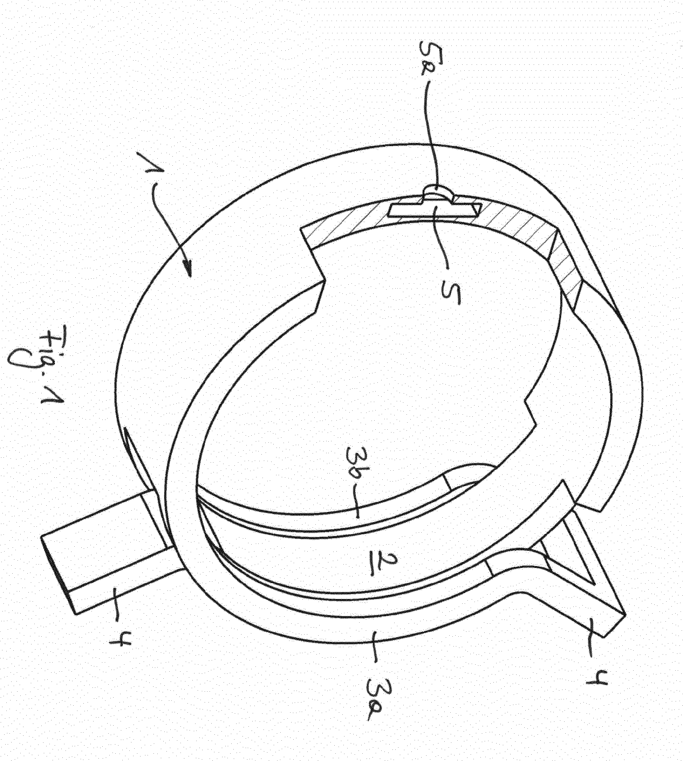

Die Figur 1 zeigt eine mögliche Ausführung einer Federbandschelle mit einem Bandelement 1, das zu einem Ring geformt ist und zwei freie Endbereiche 2 und 3 aufweist, die bereichsweise nebeneinander liegen, insbesondere axial nebeneinander, hier nämlich dadurch, dass der freie Endbereich 2 einen Innenschenkel 2 bildet und der andere freie Endbereich 3 zwei Außenschenkel 3a und 3b umfasst, welche den Innenschenkel 2 außen herum umgeben. Die freien Endbereiche 2 und 3 weisen Handhaben 4 auf, um den vom Bandelement 1 umschlossenen Ringquerschnitt zu öffnen, dadurch dass die Handhaben 4 aufeinander zubewegt werden. Die Handhaben werden bei Federbandschellen oft auch als Ohren bezeichnet. Diese Beschreibung der Figur 1 trifft auch auf die Figuren zu den anderen Ausführungen zu.

Bei der Figur 1 sind die Handhaben 4 an dem jeweils äußersten Enden des Bandelementes 1 bzw. der beiden freien Endbereiche angeordnet. Dies ist bei dem überwiegenden Teil der in den anderen Figuren gezeigten Ausführungen auch so, muss aber nicht zwingend realisiert sein.

In der Figur 1 ist ein ausgeschnittener Bereich visualisiert, in welchem eine Ausnehmung 5 der zuvor genannten Art angeordnet ist. Sie befindet sich somit innerhalb der radialen Dicke des Bandelementes 1. Hier hat die Ausnehmung 5 eine Mündungsöffnung 5a innerhalb der radial außen liegenden Bandelementoberfläche.

In eine Ausnehmung jeglicher Art kann ein Funktionselement eingesetzt werden, insbesondere welches eine Funktion erschließt, die von der Federbandschelle alleine nicht ausführbar ist. Ein Funktionselement kann formschlüssig und/oder kraftschlüssig und/oder stoffschlüssig in einer Ausnehmung befestigt werden, z. B. durch Verschweißen, Verlöten oder Verkleben.

Als Funktionselement kann vorzugsweise wenigstens eines der folgenden Bauteile in eine Ausnehmung eingesetzt werden: ein Sensor, vorzugsweise ein Temperatursensor oder ein Drucksensor oder ein Kraftsensor, ein Speicherelement, insbesondere RFID-Chip, ein Aktor, vorzugsweise zur Kraftausübung, insbesondere ein Piezo-Element, ein Kommunikationselement, vorzugsweise zur drahtlosen Übertragung von Daten eines Sensors im/am Bandelement, eine Steuerelektronik, vorzugsweise zur Ansteuerung eines im/am Bandelement angeordneten Aktors.

Es lässt sich so z. B. mit einem Kraftsensor die Funktion erschließen, dass die von der Federschelle ausgeübte Kraft mit dem Kraftsensor gemessen und überwacht wird. Bei nachlassender Kraft kann die Kraft mit einem Aktor, z. B. dem genannten Piezoaktor, vergrößert werden, oder das festgestellte Messereignis wird nach außen kommuniziert, z. B. zu einer Leitstelle.

Durch die additive Fertigung erschließen sich Möglichkeiten, Konstruktionen an der Federbandschelle zu realisieren, die auf übliche Weise nicht möglich sind, zumindest nicht einstückig mit dem Bandelement.

Erfindungsgemäß kann es vorgesehen sein, dass die nach radial außen gerichtete Handhabe am Innenschenkel breiter ist als der Abstand zwischen den beiden Außenschenkeln, insbesondere weisen die nach radial außen gerichteten Bereiche der freien Endbereiche des Bandelementes Handhaben mit derselben Breite auf.

Ein solche Ausführung ist durch umformende Herstellung eines Bandes nicht möglich, da die Handhabe am Innenschenkel bei der Umformung durch den Abstandsbereich zwischen den Außenschenkeln geführt werden muss. Da eine Umformung bei der Erfindung hingegen nicht vorliegt, kann diese Beschränkung umgangen werden. Es können so auch gleich breite (betrachtet in Ringachsenrichtung) Handhaben hergestellt werden, wodurch sich eine sichere Handhabung, z. B. mit einer Zange, aber auch manuell erschließt.

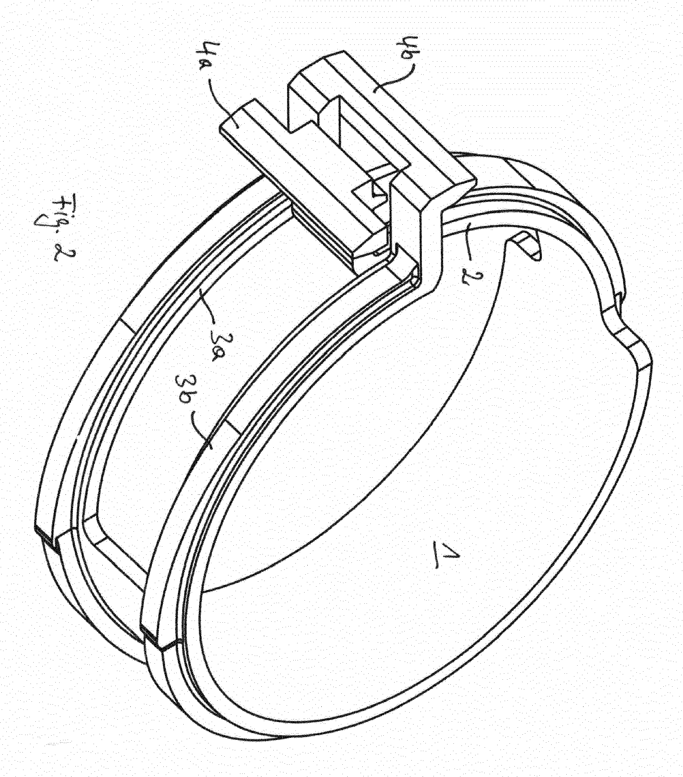

Die Figur 2 zeigt eine Ausführung einer Federbandschelle im geöffneten Zustand mit einem zu einem Ring geformten Bandelement 1, bei dem der Innenschenkel 2 bereichsweise zwischen den Außenschenkeln 3a und 3b liegt, aber die Handhabe 4a an diesem Innenschenkel 2 genauso breit ist, wie die Handhabe 4b, welche die Außenschenkel 3a/3b verbindet.

Es kann in bevorzugter Ausführung auch vorgesehen sein, dass wenigstens eine der Handhaben, vorzugsweise beide Handhaben am nach radial außen gerichteten Bereich der freien Endbereiche des Bandelementes eine zur gegenüberliegenden Handhabe weisende Auflaufschräge aufweist/aufweisen, mit welcher die freien Bandelementenden zueinander radial positionierbar sind, insbesondere dadurch, dass beim Annähern der Handhaben aneinander beim Öffnen der Federbandschelle eine Handhabe auf die Auflaufschräge der anderen aufläuft.

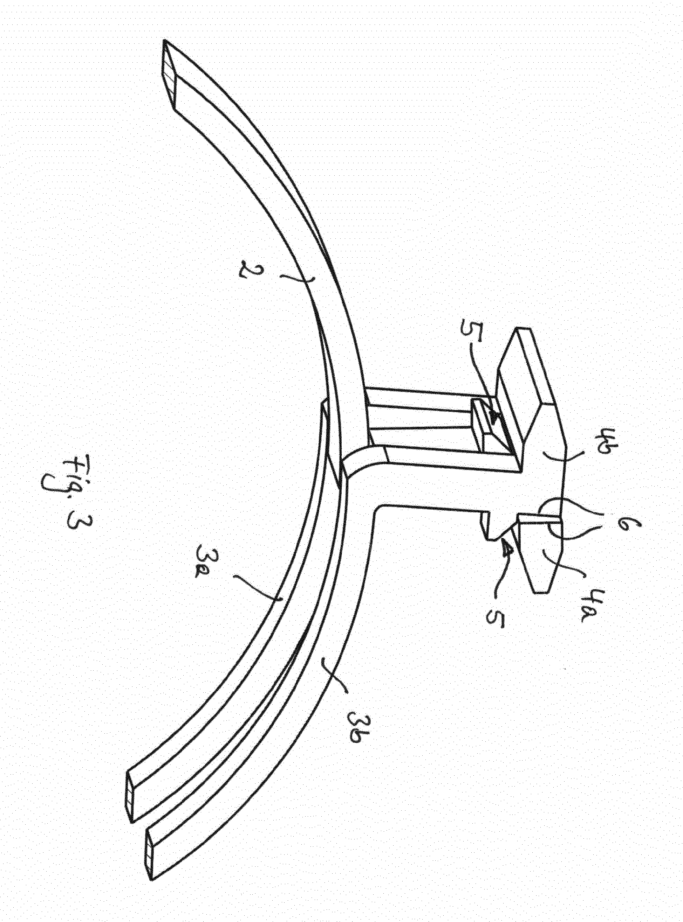

Eine solche Ausführung ist in der Figur 3 an einem Ausschnitt einer Federbandschelle gezeigt. Erkennbar ist hier, dass die Handhabe 4b eine zur Handhabe 4a vorspringende Auflaufschläge 5 aufweist. Dieselbe Konstruktion weist in umgekehrter Richtung auch die Handhabe 4a auf. In dem hier gezeigten geöffneten Zustand der Federbandschelle laufen die Handhaben 4a, 4b bei Annäherung aneinander jeweils auf die Auflaufschräge 5 der anderen auf, wodurch sich die Handhaben 4a, 4b und natürlich auch die freien Endbereiche 2 und 3 des Bandelements 1 zueinander in radialer Richtung ausrichten. Es wird so ein maximaler Querschnitt der Federbandschelle erreicht. Eine radiale Verschiebung der freien Endbereiche bei der Handhabung wird verhindert.

Die maximale Annäherung der Handhaben 4a, 4b aneinander kann z.B. dadurch begrenzt werden, dass diese aneinander anschlagen, z. B. an einer jeweiligen Anschlagfläche 6, die aufeinander zu gerichtet sind.

Allgemein können solche Anschlagflächen, an einer Handhabe auf der dem Angriffsort einer Zange gegenüberliegenden Bereich der Handhabe angeordnet sein. Durch das Anschlagen wird die Öffnungsweite der Federbandschelle begrenzt. Ein zu großes Öffnen der Federbandschelle wird so verhindert. Zu große Öffnungskräfte können weiterhin in einer solchen Ausführung keine Biegemomente auf die Handhaben und das Bandelement bzw. dessen freie Endbereiche ausüben.

Eine weitere bevorzugte Ausführung kann vorsehen, dass die Handhaben am nach radial außen gerichteten Bereich der freien Enden des Bandelementes zusammenwirkende Rastmittel aufweisen, mit denen die Handhaben beim Öffnen der Federbandschelle aneinander zumindest zeitweise befestigbar sind.

So können die Handhaben z. B. mit einer Zange oder manuell aufeinander zu bewegt werden, um die Federbandschelle zu öffnen, wobei diese sich aneinander befestigen, z. B. durch Verrastung und die Federbandschelle in der geöffneten Stellung verbleibt.

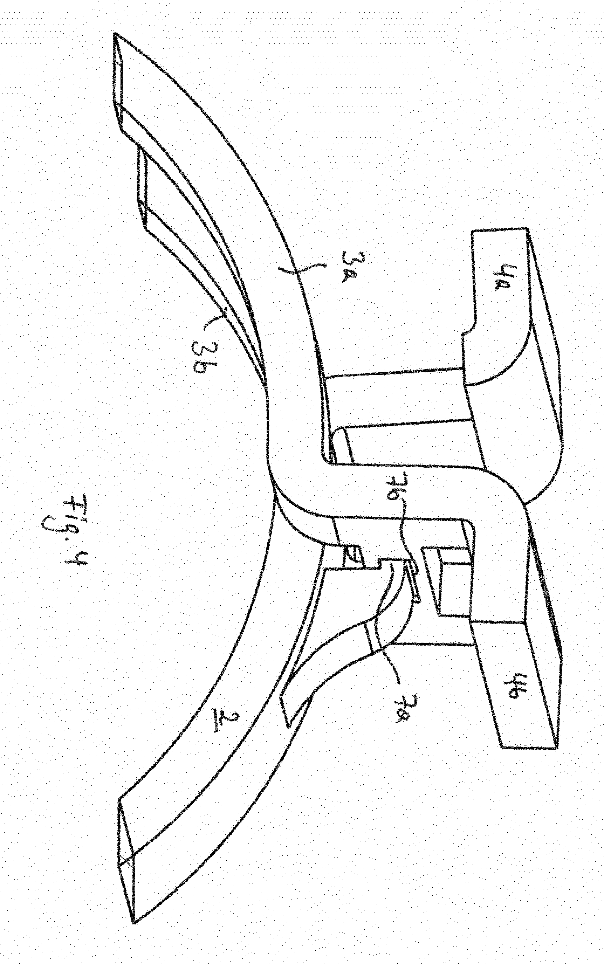

Die Figur 4 zeigt dafür eine erste mögliche Ausführung. Am freien Endbereich des Innenschenkels 2 ist eine zur Handhabe 4b des anderen freien Endbereichs 3 und nach unten weisende Rastnase 7a angeordnet, die in einer Ausnehmung 7b, z.B. unten hinterschnittenen Ausnehmung 7b am Verbindungsteg angeordnet ist, der die Außenschenkel 3a, 3b unter der Handhabe 4b des freien Endbereiches 3 verbindet. Die Verrastung zwischen Rastnase 7a und Ausnehmung 7b kann z.B. gelöst werden durch radialen Druck auf die Handhabe 4b. Die Rastnase 7a kann am freien Endbereich 2 in radialer Richtung nach außen aufstehend angeordnet sein.

Der besondere Vorteil im Vergleich zum Stand der Technik liegt darin, dass die Rastnase nicht mehr aus dem Bandelement bzw. dessen freien Endbereich herausgeformt werden muss. Die ist im Stand der Technik problematisch, da die Rastnase in einer breiten Ausführung entweder das Bandelement schwächt, oder ansonsten selbst nicht stabil genug ist. Die Ausbildung der Rastnase kann bei der Erfindung unabhängig von der Bandelementgestaltung erfolgen, da sie additiv an das Bandelement angefügt wird.

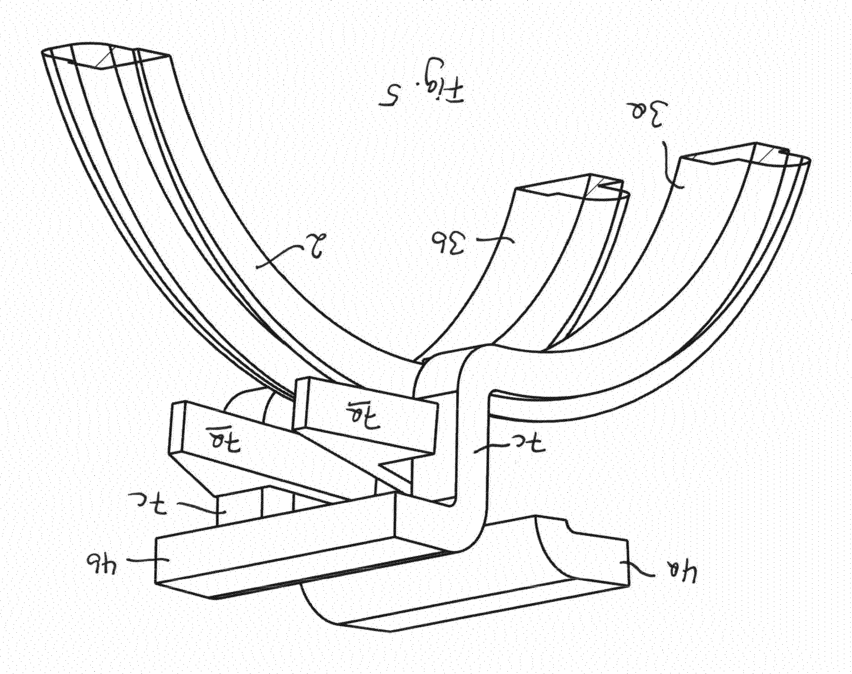

Eine andere Ausführung zeigt Figur 5. Hier weist die Handhabe 4a zwei zur gegenüberliegenden Handhabe 4b weisende aufgespreizte sich zur Handhabe 4b verjüngende Rastelemente 7a auf, die durch zwei von den Außenschenkeln 3a, 3b nach oben zur Handhabe 4b aufstehende mitwirkende Stege 7c in deren Abstandsbereich durchgreifen und darin verrasten können. Durch zusammendrücken der Rastelemente 7a können diese aus der Verrastung wieder gelöst werden.

Vorteil ist hier, dass die freien Endbereiche nicht mehr radial zueinander verschränkt werden müssen, was bei konventionellen Federbandschellen zu zusätzlicher unerwünschter plastischer Verformung führen kann.

Die Erfindung kann auch vorsehen, dass die Handhaben am nach radial außen gerichteten Bereich der freien Endbereiche des Bandelementes auf ihren voneinander wegweisenden Seiten jeweils wenigstens eine Codierstruktur aufweisen, die mit einer korrespondierenden, insbesondere als Negativform ausgebildeten Codierstruktur an einer Handhabungszange formschließend zusammenwirken können.

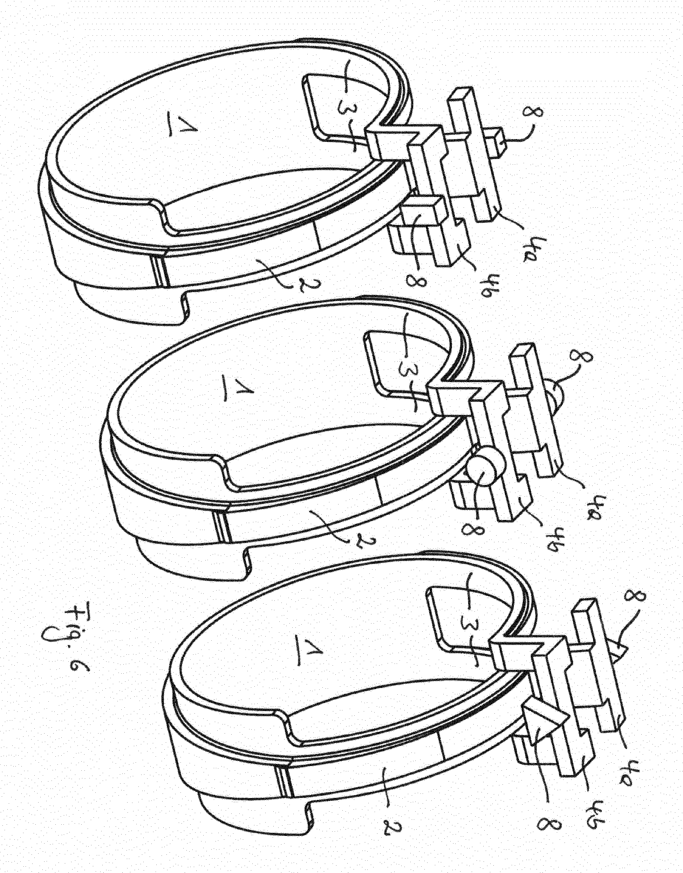

Die Figur 6 zeigt solche Codierstrukturen 8 in unterschiedlichen vereinfacht dargestellten Formen. Links ist die Codierstruktur 8 als Körper, insbesondere als ein Zylinderkörper mit einer Grundfläche dargestellt, wobei der Körper bzw. die Grundfläche Viereckquerschnitt, mittig Kreisquerschnitt und rechts Dreiecksquerschnitt aufweist. Ein Handhabungswerkzeug, z. B. eine Zange kann an den mit den Handhaben zusammenwirkenden Backen entsprechend negativ ausgeformte Codierstrukturen aufweisen, woraus sich ergibt, dass nur eine zur Federbandschelle passende Zange verwendet werden kann. Neben einer proprietären Ausgestaltung des Systems aus Zange und Federbandschelle bietet diese Ausführung auch einen verbesserten Schutz gegen Abrutschen der Zange und gewährleistet somit eine sichere Handhabung.

Die Handhaben können weiterhin am nach radial außen gerichteten Bereich der freien Enden des Bandelementes voneinander abgewandte Zangen-Angriffsbereiche aufweisen, die verjüngend ausgebildet sind.

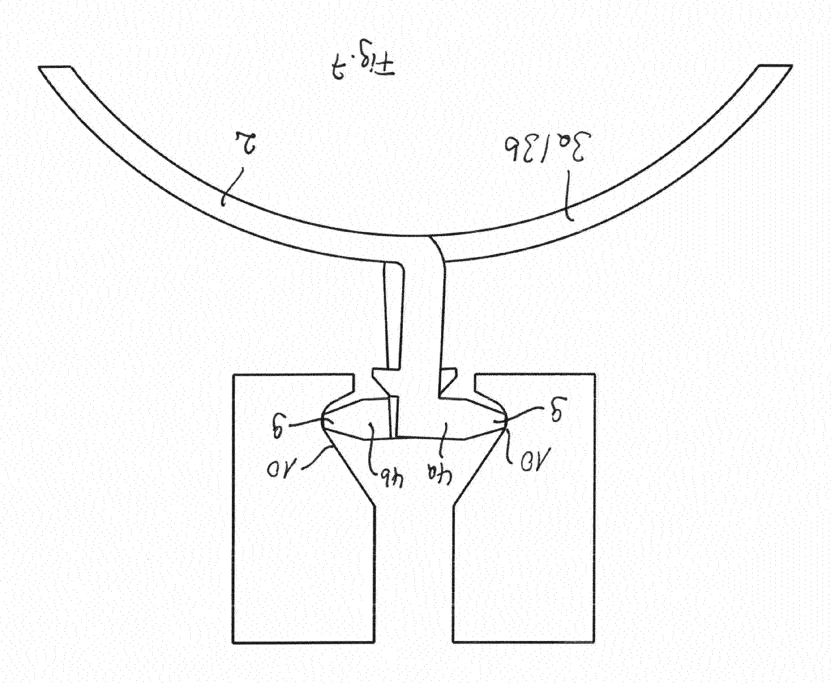

Eine solche Ausbildung zeigt die Figur 7. Hier sind die Handhaben 4a/4b im Bereich, welcher zu den Zangenbacken weist, mit einem verjüngend zulaufenden Angriffsbereich 9 ausgebildet. Eine Zangenbacke kann eine jeweilige Ausnehmung 10 aufweisen, welche die Angriffsbereiche 9 aufnimmt. Auch hierdurch ist ein Abrutschen sicher verhindert.

### Auch diese Ausführung bietet den Vorteil einer definierten Krafteinleitung.

Allgemein kann es die Erfindung vorsehen, wie auch die Figur 7 zeigt, dass bei maximal möglicher Öffnung des Ringquerschnitts der Federbandschelle, vorzugsweise die durch ein Anschlagen der Handhaben aneinander begrenzt sein kann, die beiden Stegbereiche, welche die Handhaben mit dem Bandelement in dessen zum Ring geformten Bereich verbinden, nicht parallel zueinander stehen, insbesondere einen spitzen Winkel um einen Punkt bilden, der außerhalb des Ringes liegt. Die Erfindung kann vorsehen hierfür die Stegbereiche beider Handhaben in ihrer Erstreckung mit verschiedenem Winkel relativ zu einer jeweiligen Tangente an ihrem Fußpunkt am Übergang zu dem zum Ring geformten Bereich des Bandelementes auszubilden.

Eine weitere bevorzugte Ausführung kann vorsehen, dass die Handhaben am nach radial außen gerichteten Bereich der freien Endbereiche des Bandelementes über Stegbereiche mit dem zum Ring geformten Bereich des Bandelementes verbunden sind, wobei die Stegbereiche in einem Winkel von 80 bis 100 Grad, vorzugsweise 85 bis 95 Grad, weiter bevorzugt 90 Grad zu einer Tangente an dem zum Ring geformten Bereich des Bandelementes verlaufen.

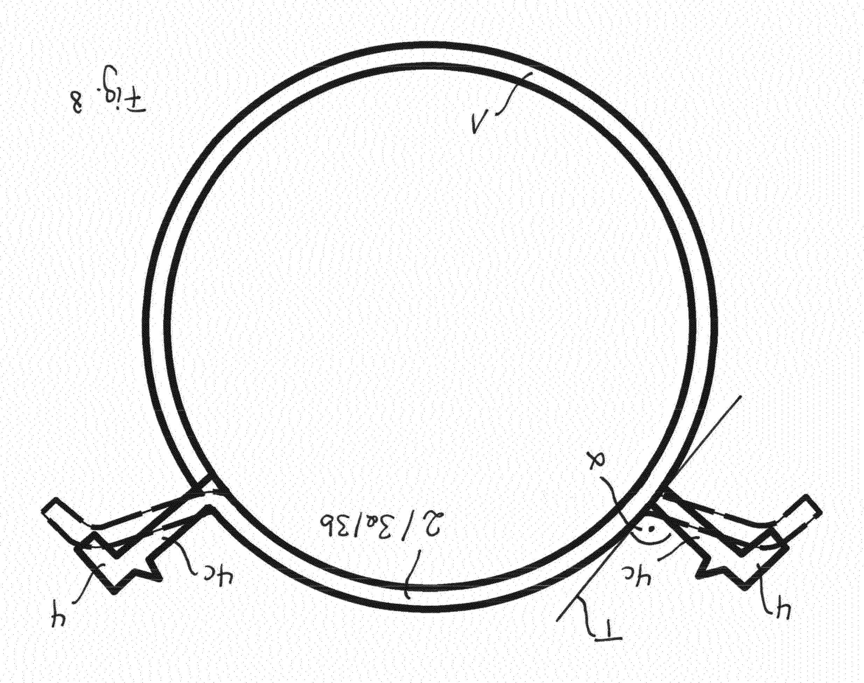

Die Figur 8 zeigt eine solche Ausführung im Vergleich zu einer herkömmlichen Federbandschelle, die durch biegende Umformung unter Bewahrung eines Mindestbiegeradius geformt ist. Aufgrund der additiven Fertigung muss ein solcher Biegeradius bei der Erfindung nicht beachtet werden. Der jeweilige Steg 4c, der die Handhabe 4 mit dem Innenschenkel 2 oder den Außenschenkeln 3a/3b verbindet, kann somit - wie hier gezeigt - bevorzugt unter dem Winkel α = 90 Grad zur Tangenten T verlaufen.

Die Erfindung kann weiterhin vorzugsweise vorsehen, dass die Handhaben am nach radial außen gerichteten Bereich der freien Endbereiche des Bandelementes jeweils vom in der Umfangsrichtung äußersten Ende des Bandelementes beabstandet angeordnet sind, insbesondere wodurch die Angriffspunkte an den Handhaben für eine Handhabungszange einen geringeren Abstand aufweisen, als die äußersten Enden des Bandelementes.

Mit einer solchen Ausführung lässt sich auch bei vergleichsweise großen Federbandschellen die benötigte Backenweite bei den Spannzangen reduzieren.

Anders als bei der herkömmlichen Herstellung, wo die Handhaben auch die äußersten Enden des Bandelementes bzw. von dessen freien Endbereichen bilden, können bei additiver Fertigung die Handhaben genaugenommen beliebig an einem jeweiligen freien Endebereich des Bandelementes angeordnet werden, insbesondere zumindest in einem Bereich, wo diese nebeneinander liegen.

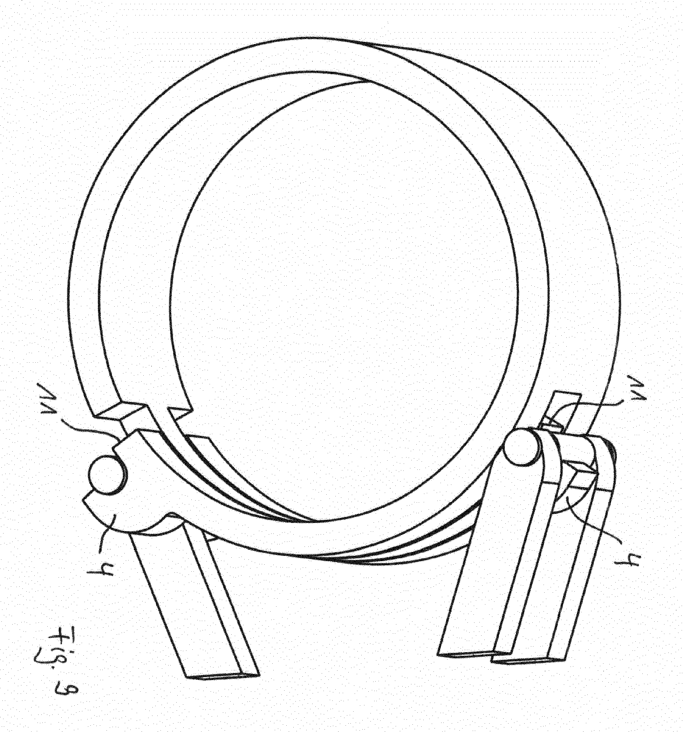

Die Figur 9 zeigt eine solche Ausführung. Erkennbar ist hier, dass eine jeweilige Handhabe 4 vom jeweiligen äußerten Ende 11 der freien Endbereiche 2/3 beabstandet ist.

Weitere vorteilhafte Ausführungsformen können vorsehen, dass am Bandelement in seinem zum Ring geformten Bereich auf seiner radial innen und/oder radial außen liegenden Oberfläche wenigstens eine Versteifungsstruktur angeordnet wird. Mit einer solchen Versteifungsstruktur kann die Kraftwirkung in Umfangsrichtung um einen zu klemmenden Schlauch besser vergleichmäßigt oder auch gezielt über den Umfang und die Breite eingestellt werden.

Z. B. kann vorgesehen sein, mittels der Methode der Finiten Elemente die wirkenden Kräfte zu simulieren und durch Vorsehen von wenigstens einer Versteifungsstruktur und Optimieren der Versteifungsstruktur die Kräfte zu vergleichmäßigen, wobei anhand der Resultate dieser Maßnahme die Versteifungsstrukturen additiv an ein Bandelement angefügt werden.

Vorzugsweise kann dabei vorgesehen werden, dass eine Versteifungsstruktur in Umfangsrichtung des zum Ring geformten Bandelementes einen sich ändernden Querschnitt aufweist.

In einer möglichen bevorzugten Ausführung kann eine Versteifungsstruktur am Bandelement angeordnet werden, die im Querschnitt, insbesondere betrachtet senkrecht zur Umfangsrichtung des Ringes, T-förmig ausgebildet ist, vorzugsweise wobei die Versteifungsstruktur zusammen mit dem Bandelement eine Doppel-T-Struktur bildet.

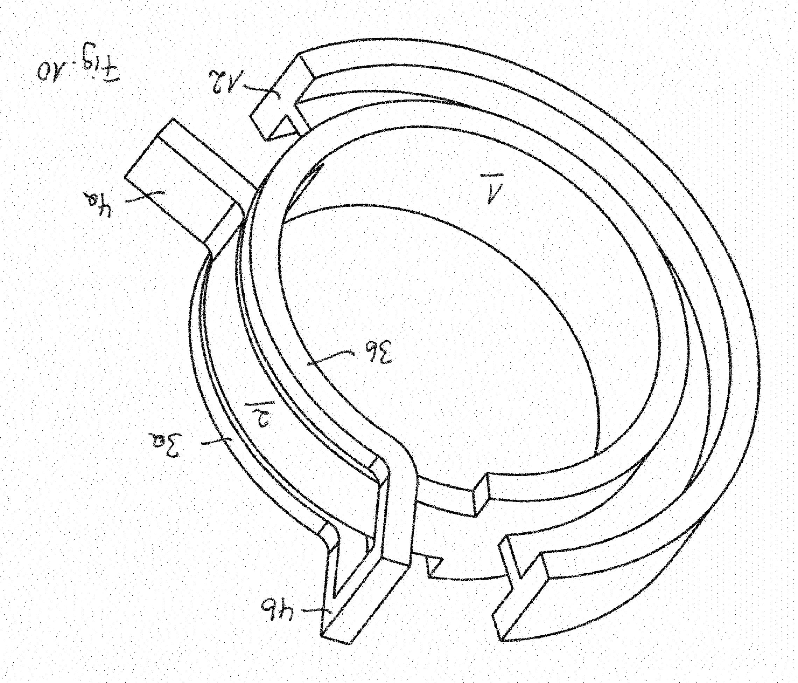

Eine solche Versteifungsstruktur ist in der Figur 10 dargestellt. Die Versteifungsstruktur 12 ist hier im Querschnitt gut erkennbar T-förmig. Vorzugsweise erstreckt sie sich zwischen den Bereichen des zum Ring geformten Bandelements 1, wo dieses an seinen freien Endbereichen in den Innenschenkel 2 bzw. die Außenschenkel 3a/3b übergeht. In dieser gezeigten Ausführung ist der Querschnitt des Versteifungselementes 12 in der Umfangsrichtung gleichbleibend, kann aber auch variierend ausgebildet sein

Die Erfindung kann auch vorsehen, dass die Banddicke, betrachtet in radialer Richtung in der Umfangsrichtung variierend ausgebildet wird. Eine solche Dickenvariation kann bei der Gesamtheit aus Bandelement und Versteifungselement vorgesehen sein, oder nur beim Versteifungselement, was auf einem Bandelement aufgebracht ist oder nur bei einem Bandelement, welches unter einem Versteifungselement liegt.

Vorzugsweise kann eine zumindest lokal erhöhte Dicke des Bandelementes oder der darauf angeordneten Versteifungsstruktur in einem Umgebungsbereich um den Ort des Bandelementes herum angeordnet sein, an dem sich das Bandelement zum Innenschenkel verjüngt oder in die zwei Außenschenkel aufspaltet.

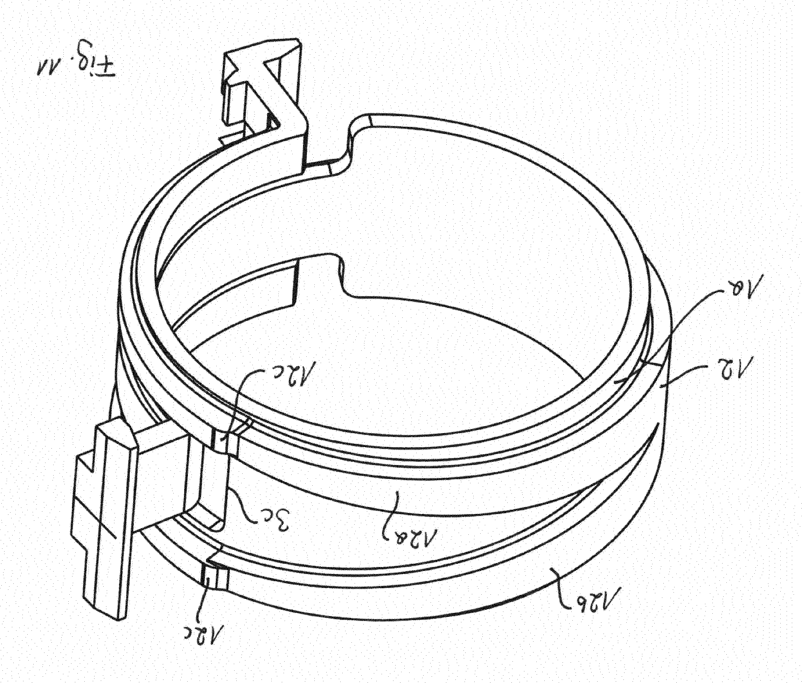

Die Figur 11 zeigt eine Ausführung, in welcher die Versteifungsstruktur 12 sich in der Breite, insbesondere betrachtet in axialer Richtung des Ringes, ausgehend vom dem freien Ende des Bandelementes 1, welches den Innenschenkel 2 bildet, in Richtung zum freien Ende des Bandelementes 1, welche die Außenschenkel 3a/3b bildet verjüngt, wobei die Versteifungsstruktur 12 sich in einem Abstand vor der Aufspaltung 3c des Bandelementes 1 in die zwei Außenschenkel 3a, 3b in zwei Teilversteifungsstrukturen 12a, 12b aufspaltet, die sich jeweils in Richtung zum freien Endbereich des Bandelementes 1, welches die Außenschenkel 3a, 3b bildet, verjüngen und von denen jeweils eine in einen der Außenschenkel 3a, 3b ausläuft. Eine Verjüngung der Versteifungsstruktur / Teilversteifungsstruktur in Richtung zum einem freien Endbereich 2/3 kann auch in der radialen Dickenrichtung gegeben sein

Als Versteifungsstruktur 12 wird vorzugsweise eine solche Struktur verstanden, die sich über die Oberfläche 1a des Bandelementes 1 erhebt.

Die Figur 11 zeigt weiterhin eine lokal erhöhte Dicke 12c, insbesondere einen Dickensprung der Teilversteifungsstrukturen 12a, 12b am Ort der Aufspaltung 3c, vorzugsweise wonach in Richtung zum freien Endbereich 3 eine weitere Verringerung der radialen Dicke erfolgt.

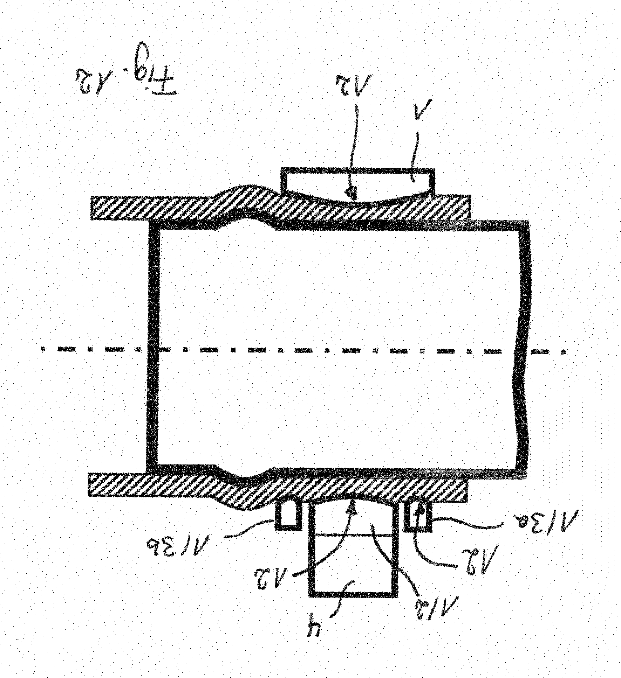

Besonders, wenn eine Versteifungsstruktur und/oder Teilversteifungsstruktur auf der radial innen liegenden Oberfläche des Bandelementes angeordnet ist, kann diese in Richtung zur Ringmitte eine konvexe Oberfläche ausbilden. Dies ist in der Figur 12 visualisiert. Hierdurch wird eine verbesserte Abzugssicherung und/oder eine lokal erhöhte Flächenpressung erzielt.

Eine weitere bevorzugte Ausführung kann vorsehen, dass auf der radial innen liegenden Oberfläche des zum Ring geformten Bandelementes eine Oberflächenstruktur angeordnet wird, insbesondere die formkorrespondierend ausgebildet ist zu der Oberflächenstruktur auf einem Stutzen, auf dem mit der Federbandschelle ein Schlauch zu befestigen ist.

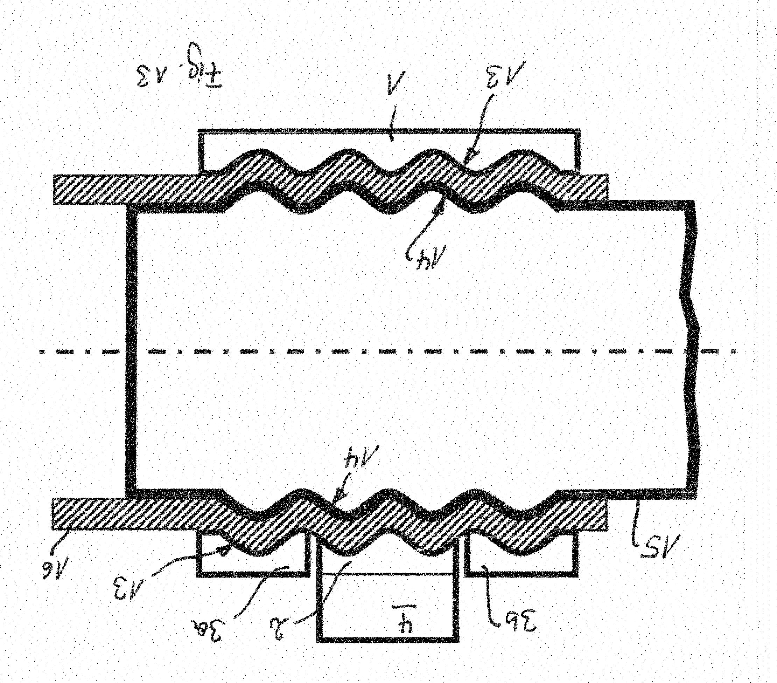

Die Figur 13 zeigt eine solche Ausführung. Die Oberflächenstruktur 13 an der Innenfläche des Bandes, insbesondere auch an dessen freien Enden 2/3a,3b ist hier vereinfacht als wellige Struktur gezeigt. Die Oberflächenstruktur 14 am Stutzen 15 ist insofern korrespondierend, als dass diese Struktur zu der am Bandelement 1 negativ ausgebildet ist. So wird der Schlauch 16 zwischen den Strukturen 13/14 ideal umschlossen und gegen ein Abziehen gesichert.

Die in einer bestimmten Figur gezeigten Konstruktionsdetails einer Federbandschelle können zusätzlich auch vorgesehen sein bei einer Federbandschelle einer anderen Figur, in welcher diese Konstruktionsdetails nicht visualisiert sind.

## Patentansprüche

1. Verfahren zur Herstellung einer Federbandschelle umfassend ein ringförmiges Bandelement (1) mit zwei freien Endbereiche (2, 3), die zumindest bereichsweise nebeneinanderliegend angeordnet sind, **dadurch gekennzeichnet, dass** das Bandelement (1) additiv gefertigt wird, insbesondere wobei die das Bandelement (1) bildenden Schichten in Ebenen parallel zur Ringebene angeordnet werden, vorzugsweise das Bandelement (1) aus wenigstens einem Pulver, vorzugsweise Metallpulver, additiv gefertigt wird, insbesondere durch pulverbettbasiertes Schmelzen, vorzugsweise mittels Laserstrahl oder mittels Elektronenstrahl.

2. Verfahren nach Anspruch 1, **dadurch gekennzeichnet, dass** im Bandelement (1) lokal unterschiedlichen Materialeigenschaften, insbesondere lokale Eigenschaftsgradienten erzeugt werden, vorzugsweise durch lokal unterschiedliche Herstellungsparameter, insbesondere durch lokale Variierung von Laser-/Elektronenstrahlparametern und/oder Materialparametern.

3. Verfahren nach Anspruch 1 oder 2, **dadurch gekennzeichnet, dass** wenigstens eine Eigenschaft des Werkstoffs der Federbandschelle, vorzugsweise die Härte, insbesondere nach Vickers, durch die additive Fertigung gegenüber einem artgleichen umgeformten Werkstoff verbessert wird, vorzugsweise durch eine Reduktion der Korngröße des Gefüges oder eine Reduktion des Restaustenitgehalts oder die Einstellung von Ungleichgewichtszuständen, insbesondere welche zu einer stärker ausgeprägten Ausscheidungshärtung führen.

4. Verfahren nach einem der vorherigen Ansprüche, **dadurch gekennzeichnet, dass** zur Bildung wenigstens einer ganzen Schicht, insbesondere zur Bildung einer Gruppe von aneinander angrenzenden ganzen Schichten, oder zur Bildung eines Bereichs innerhalb einer Schicht oder eines Bereichs in einer Gruppe von Schichten ein Material eingesetzt wird, dessen E-Modul unterschiedlich ist zu dem Material in wenigstens einer anderen Schicht, insbesondere einer anderen Gruppe von aneinander angrenzenden Schichten oder unterschiedlich ist zum Material in einem anderen Bereich.

5. Verfahren nach einem der vorherigen Ansprüche, **dadurch gekennzeichnet, dass** bezüglich der Ringachse, um die herum sich das ringförmige Bandelement (1) erstreckt, in einem bzgl. der axialen Richtung, und/oder der in radialen Richtung und/oder der Umfangsrichtung betrachteten Kernbereich des Bandelementes (1) das Material einen E-Modul aufweist, welcher unterschiedlich ist, insbesondere geringer oder größer als bei dem Material in Bereichen des Bandelementes (1), welche den Kernbereich in axialer Richtung und/oder in radialer Richtung und/oder in Umfangsrichtung, umgeben.

6. Verfahren nach einem der vorherigen Ansprüche, **dadurch gekennzeichnet, dass** Pulver aus wenigstens einem der folgenden Materialien eingesetzt werden: Titan oder seine Legierungen, nichtrostende Stahllegierungen, wenigstens einer Formgedächtnislegierung, insbesondere auf der Basis von Nickel und Titan, vorzugsweise Nitinol, Nickelbasislegierungen, Kupferlegierungen, Aluminiumlegierungen, Kobalt-Chrom-Legierungen, Werkzeugstahllegierungen, Stahllegierungen, Wolfram und seine Legierungen oder Keramiken.

7. Verfahren nach einem der vorherigen Ansprüche, **dadurch gekennzeichnet, dass** im Bandelement (1) wenigstens eine Ausnehmung (5) hergestellt wird, in die ein Funktionselement eingesetzt wird.

8. Verfahren nach Anspruch 7, **dadurch gekennzeichnet, dass**
a. eine Ausnehmung (5) hergestellt wird, die nach Abschluss der Bandherstellung offen ist und in die nach der Bandherstellung das Funktionselement eingesetzt wird, und / oder
b. eine Ausnehmung (5) hergestellt wird, die nach der Herstellung des Bandes geschlossen ist und in die während einer Verfahrensunterbrechung, in welcher die Ausnehmung zugänglich ist, das Funktionselement eingesetzt wird

9. Verfahren nach Anspruch 8, **dadurch gekennzeichnet, dass** die Ausnehmung (5)
a. nach der Bandherstellung in Richtung nach radial innen offen ist, und/oder
b. nach der Bandherstellung in Richtung nach radial außen offen ist, und/oder
c. sich in Umfangsrichtung des Bandelementes (1) erstreckt, insbesondere hierdurch einen sich in Umfangsrichtung erstreckenden Kanal bildet, vorzugsweise, dessen radialer Abstand zur Bandelementinnenfläche sich in Umfangsrichtung ändert, und/oder
d. nach der Bandelementherstellung geschlossen und näher zur Bandelementinnenfläche als zur Bandaußenfläche angeordnet ist.

10. Verfahren nach einem der vorherigen Ansprüche 7 bis 9, **dadurch gekennzeichnet, dass** als Funktionselement wenigstens eines der folgenden Bauteile in eine Ausnehmung eingesetzt wird:
a. ein Sensor, vorzugsweise ein Temperatursensor oder ein Drucksensor oder ein Kraftsensor,
b. ein Speicherelement, insbesondere RFID-Chip,
c. ein Aktor, vorzugsweise zur Kraftausübung, insbesondere ein Piezo-Element,
d. ein Kommunikationselement, vorzugsweise zur drahtlosen Übertragung von Daten eines Sensors im/am Bandelement
e. eine Steuerelektronik, vorzugsweise zur Ansteuerung eines im/am Bandelement angeordneten Aktors.

11. Verfahren nach einem der vorherigen Ansprüche, **dadurch gekennzeichnet, dass** im Bereich der freien Endbereiche (2, 3) des Bandelementes (1) wenigstens eine der folgenden Konstruktionen hergestellt wird:
a. die nach radial außen gerichtete Handhabe (4, 4a, 4b) / das Ohr am Innenschenkel (2) ist breiter als der Abstand zwischen den beiden Außenschenkeln (3a, 3b), insbesondere weisen die nach radial außen gerichteten Bereiche der freien Endbereiche des Bandelementes (1) Handhaben (4, 4a, 4b) / Ohren mit derselben Breite auf
b. wenigstens eine der Handhaben (4, 4a, 4b), vorzugsweise beide Handhaben (4, 4a, 4b) am nach radial außen gerichteten Bereich der freien Endbereiche (2, 3) des Bandelementes (1) weist/weisen eine zur gegenüberliegenden Handhabe (4, 4a, 4b) weisende Auflaufschräge (5) auf, mit welcher die freien Endbereiche (2,3) zueinander radial positionierbar sind, insbesondere dadurch, dass beim Annähern der Handhaben (4, 4a, 4b) aneinander beim Öffnen der Federbandschelle eine Handhabe (4, 4a, 4b) auf die Auflaufschräge (5) der anderen aufläuft.
c. die Handhaben (4, 4a, 4b) am nach radial außen gerichteten Bereich der freien Endbereiche (2,3) des Bandelementes (1) weisen zusammenwirkende Rastmittel (7a, 7b) auf, mit denen die Handhaben (4, 4a, 4b) beim Öffnen der Federbandschelle aneinander zumindest zeitweise befestigbar sind
d. die Handhaben (4, 4a, 4b) am nach radial außen gerichteten Bereich der freien Endbereiche (2,3) des Bandelementes (1) weisen auf ihren voneinander wegweisenden Seiten jeweils wenigstens eine Codierstruktur (8) auf, die mit einer korrespondierenden, insbesondere als Negativform ausgebildeten Codierstruktur an einer Handhabungszange formschließend zusammenwirken kann
e. die Handhaben (4, 4a, 4b) am nach radial außen gerichteten Bereich der freien Endbereiche (2,3) des Bandelementes (1) weisen voneinander abgewandte Zangen-Angriffsbereiche (9) auf, die verjüngend ausgebildet sind
f. die Handhaben (4, 4a, 4b) am nach radial außen gerichteten Bereich der freien Endbereiche (2,3) des Bandelementes (1) sind über Stegbereiche (4c) mit dem zum Ring geformten Bereich des Bandelementes (1) verbunden, wobei die Stegbereiche (4c) in einem Winkel vom 80 bis 100 Grad, vorzugsweise 85 bis 95 Grad, weiter bevorzugt 90 Grad zu einer Tangenten (T) an dem zum Ring geformten Bereich des Bandelementes (1) verlaufen.
g. die Handhaben (4, 4a, 4b) am nach radial außen gerichteten Bereich der freien Endbereiche (2,3) des Bandelementes (1) sind jeweils vom äußersten Ende (11) des Bandelementes (1) beabstandet angeordnet, insbesondere wodurch die Angriffspunkte (9) an den Handhaben (4, 4a, 4b) für eine Handhabungszange einen geringeren Abstand aufweisen, als die äußersten Enden (11) des Bandelementes.

12. Verfahren nach einem der vorherigen Ansprüche, **dadurch gekennzeichnet, dass** am Bandelement (1) in seinem zum Ring geformten Bereich auf seiner radial innen und/oder radial außen liegenden Oberfläche wenigstens eine Versteifungsstruktur (12, 12a, 12b) angeordnet wird, insbesondere wobei eine Versteifungsstruktur (12, 12a, 12b) in Umfangsrichtung einen sich ändernden Querschnitt aufweist.

13. Verfahren nach Anspruch 11, **dadurch gekennzeichnet, dass** eine Versteifungsstruktur (12, 12a, 12b) am Bandelement (1) angeordnet wird, die
a. im Querschnitt, insbesondere betrachtet senkrecht zur Umfangsrichtung des Ringes, T-förmig ausgebildet ist, vorzugsweise wobei die Versteifungsstruktur (12) zusammen mit dem Bandelement (1) eine Doppel-T-Struktur bildet und/oder
b. sich in der Breite und/oder Dicke, insbesondere betrachtet in axialer Richtung des Ringes, ausgehend vom dem freien Endbereiche (2) des Bandelementes (1), welches den Innenschenkel (2) bildet, in Richtung zum freien Ende (3) des Bandelementes (1), welche die Außenschenkel (3a, 3b) bildet verjüngt, wobei die Versteifungsstruktur (12, 12a, 12b) sich in einem Abstand vor der Aufspaltung (3c) des Bandelementes (1) in die zwei Außenschenkel (3a, 3b) in zwei Teilversteifungsstrukturen (12a, 12b) aufspaltet, die sich jeweils in Richtung zum freien Ende des Bandelementes (3), welche die Außenschenkel (3a, 3b) bildet verjüngen und von denen jeweils eine in einen der Außenschenkel (3a, 3b) ausläuft, vorzugsweise wobei eine auf der radial innen liegenden Oberfläche angeordnete Versteifungsstruktur (12) und/oder Teilversteifungsstruktur (12a, 12b) in Richtung zur Ringmitte eine konvexe Oberfläche ausbildet.

14. Verfahren nach einem der vorherigen Ansprüche, **dadurch gekennzeichnet, dass** das Bandelement (1) mit in Umfangsrichtung variierender radialer Dicke gefertigt wird.

15. Verfahren nach einem der vorherigen Ansprüche, **dadurch gekennzeichnet, dass** auf der radial innen liegenden Oberfläche des zum Ring geformten Bandelementes (1) eine Oberflächenstruktur (13) angeordnet wird, insbesondere die formkorrespondierend ausgebildet ist zu der Oberflächenstruktur (14) auf einem Stutzen (15) auf dem mit der Federbandschelle ein Schlauch (16) zu befestigen ist.

16. Federbandschelle die gemäß einem Verfahren nach einem der vorherigen Ansprüche hergestellt ist, insbesondere welche die mit dem Verfahren erzielten konstruktiven Ausgestaltungen aufweist.
